# FASCICULE DE BREVET EUROPEEN

(11) **EP 0 632 306 B1**
(45) Date de publication et mention de la délivrance du brevet: **17.12.1997**
(21) Numéro de dépôt: 94108498.0
(22) Date de dépôt: 02.06.1994
(51) Int. Cl.: G02C 5/22

(54) **Charnière de lunettes**
Brillenscharnier
Spectacle hinge

(30) Priorité: 09.06.1993 CH 1730/93
(43) Date de publication de la demande: 04.01.1995
(73) Titulaire: LN INDUSTRIES S.A., 1211 Genève 8 (CH)
(72) Inventeur: Gerbet, André, F-39300 Champagnole (FR)
(74) Mandataire: ARDIN & CIE S.A.

(56) Documents cités:
- EP-A- 0 166 822
- EP-A- 0 201 455
- EP-A- 0 395 939
- DE-U- 9 114 193
- DE-U- 9 210 056
- DE-U- 9 301 985

## Description

La présente invention a pour objet une charnière élastique pour lunettes, comprenant deux parties articulées l'une à l'autre, une première de ces parties étant destinée à être fixée à la face frontale de la monture de lunettes et la seconde de ces parties comportant un logement prévu à l'extrémité avant d'une branche de lunettes et un prolongement monté en coulissement dans ledit logement suivant l'axe longitudinal dudit logement et soumis à l'action d'un ressort de rappel retenu dans ledit logement par une pièce de verrouillage engagée au moins partiellement dans ce logement, le ressort de rappel prenant appui d'une part sur une surface dudit prolongement et d'autre part sur la pièce de verrouillage.

On connaît ce genre de charnière par le brevet EP 0 201 455 qui comprend une pièce de verrouillage ou de fermeture présentant un trou fileté orienté longitudinalement. Ce trou est destiné à recevoir une vis qui agit sur des moyens de blocage, par exemple sous forme d'une bille poussée latéralement dans une cavité pour bloquer la pièce de fermeture dans le logement.

Cette charnière est d'un prix de revient relativement élevé et nécessite la confection d'un alésage fileté pour la vis de blocage. Le montage de cette charnière est assez délicat et long considérant qu'il comprend une opération de vissage. En outre, le démontage peut être difficile, voire impossible, lorsque la bille est fortement insérée et encastrée dans la cavité, étant donné qu'elle est inaccessible par une intervention extérieure.

La présente invention a pour but de remédier à ces inconvénients et est caractérisée, à cet effet, en ce que la pièce de verrouillage comporte au moins deux branches solidaires et sensiblement perpendiculaire entre elles, une première branche possédant un allongement sensiblement parallèle à l'axe longitudinal du logement et une seconde branche étant sensiblement perpendiculaire audit axe longitudinal, le logement présentant une creusure latérale, ladite deuxième branche étant agencée de manière à s'engager au moins partiellement dans la creusure latérale et à retenir le ressort de rappel, le logement et la première branche étant conformés de façon que cette dernière soit accessible de l'extérieur du logement.

Cette construction de charnière est particulièrement simple, comprend un très petit nombre de composants, et permet un prix de revient réduit, un montage aisé et très rapide et une grande sécurité d'utilisation, tout en assurant un démontage rapide.

Dans un mode d'exécution préféré, la première branche de la pièce de verrouillage est constituée par une portion centrale solidaire, d'une part, de la deuxième branche constituée par une première portion latérale et, d'autre part, d'une seconde portion latérale, les deux portions latérales présentant chacune une saillie transversale, une première des portions latérales présentant une section droite plus petite que l'ouverture du logement et étant destinée à être introduite dans ledit logement par coulissement parallèle à l'axe longitudinal du logement, la seconde desdites portions latérales présentant une section droite plus grande que l'ouverture du logement de façon à buter par sa saillie transversale contre le bord de l'ouverture dudit logement, la creusure latérale étant destinée à recevoir au moins partiellement ladite saillie transversale de la première portion latérale après la mise en place de la pièce de verrouillage par déplacement transversal à l'axe du logement, ledit prolongement comportant un élément de retenue susceptible de coopérer par une première face avec la pièce de verrouillage de façon à la maintenir dans la position de travail dans laquelle ladite saillie transversale de la première portion latérale est engagée dans la creusure latérale.

Selon un mode d'exécution avantageux, la seconde partie de la charnière avec son prolongement est conformée de façon à maintenir la pièce de verrouillage sur le prolongement par action élastique du ressort de rappel sollicitant la pièce de verrouillage contre une seconde face dudit élément de retenue, dans une position de montage avant que ledit prolongement soit introduit suivant le sens longitudinal dans le logement.

Cette disposition particulière permet un montage particulièrement aisé de la charnière.

Selon un mode d'exécution préféré, l'ensemble constitué par la pièce de verrouillage, le logement avec sa creuseure et le prolongement avec l'élément de retenue est conformé de façon que, lors de l'introduction du prolongement dans le logement, la pièce de verrouillage prémontée sur ce prolongement entre le ressort de rappel et la première face de l'élément de retenue soit basculée par action conjointe de l'élément de retenue et du bord du logement opposé à cet élément de retenue et de façon que sous l'action du ressort de rappel de la pièce de verrouillage, cette dernière soit déplacée suivant une direction transversale à l'axe du logement et que la saillie transversale de ladite première portion latérale pénètre dans ladite creusure, l'élément de retenue entrant par sa première face en contact avec la pièce de verrouillage pour la maintenir en place dans la position de travail de la charnière.

Cette disposition assure une mise en place automatique de la pièce de verrouillage sans utilisation d'un outil quelconque.

De préférence, l'élément de retenue est conformé de façon à maintenir en place par sa première face la pièce de verrouillage avec sa saillie transversale de la première portion latérale engagée dans ladite creusure pour toutes les portions de travail de la charnière et de la branche de lunettes.

La charnière présente de ce fait une grande sécurité d'emploi.

Avantageusement, l'élément de retenue et la pièce de verrouillage sont conformés de façon à permettre un démontage dudit prolongement du logement par traction sur le prolongement suivant un sens parallèle audit sens longidutinal pour que la pièce de verrouillage soit dégagée de la pièce de retenue et par déplacement transversal de la pièce de verrouillage.

Cette construction permet un démontage rapide et aisé sans pour autant diminuer la sécurité d'emploi de la charnière.

De préférence, dans ladite position de montage, avant que le prolongement ne soit introduit dans le logement, le charnon présentant le profil de came est vissé au prolongement muni du second charnon de la charnière.

L'assemblage du pivot de la charnière est ainsi facilité, car les deux parties de la charnière ne sont pas sous tension.

Dans un autre mode d'exécution avantageux, le prolongement comprend une tige montée sur la seconde partie et portant le ressort qui s'appuie par une première extrémité sur une portion élargie de la tige et par sa deuxième extrémité sur la pièce de verrouillage, ladite seconde branche comportant une partie en saillie engagée dans la creusure latérale et une partie conformée de façon à entourer au moins partiellement la tige pour servir de butée pour la deuxième extrémité du ressort monté sur la tige.

Cette constuction permet un prix de revient très faible, tout en conférant une grande rapidité de montage.

D'autres avantages ressortent des caractéristiques exprimées dans les revendications dépendantes et de la description exposant ci-après l'invention plus en détail à l'aide de dessins qui représentent schématiquement et à titre d'exemple deux modes d'exécution et des variantes.

La figure 1 est une vue partielle des différents composants en perspective éclatée d'un premier mode d'exécution.

Les figures 2 à 4 représentent des vues en coupe à travers la charnière du premier mode d'exécution dans trois positions différentes de travail.

Les figures 5a) à 5g) illustrent les différentes phases lors du montage de la charnière conformément au premier mode d'exécution.

La figure 6 illustre le démontage de la charnière conformément au premier mode d'exécution.

Les figures 7 et 8 sont des vues en coupe de deux variantes du premier mode d'exécution.

La figure 9 est une vue en coupe partielle à travers la charnière d'un second mode d'exécution.

La figure 10 est une vue en perspective d'un détail de la figure 9.

Les figures 11 a) et 11 c) illustrent le montage de la charnière conformément au second mode d'exécution.

La figure 12 illustre le démontage de la charnière conformément au second mode d'exécution.

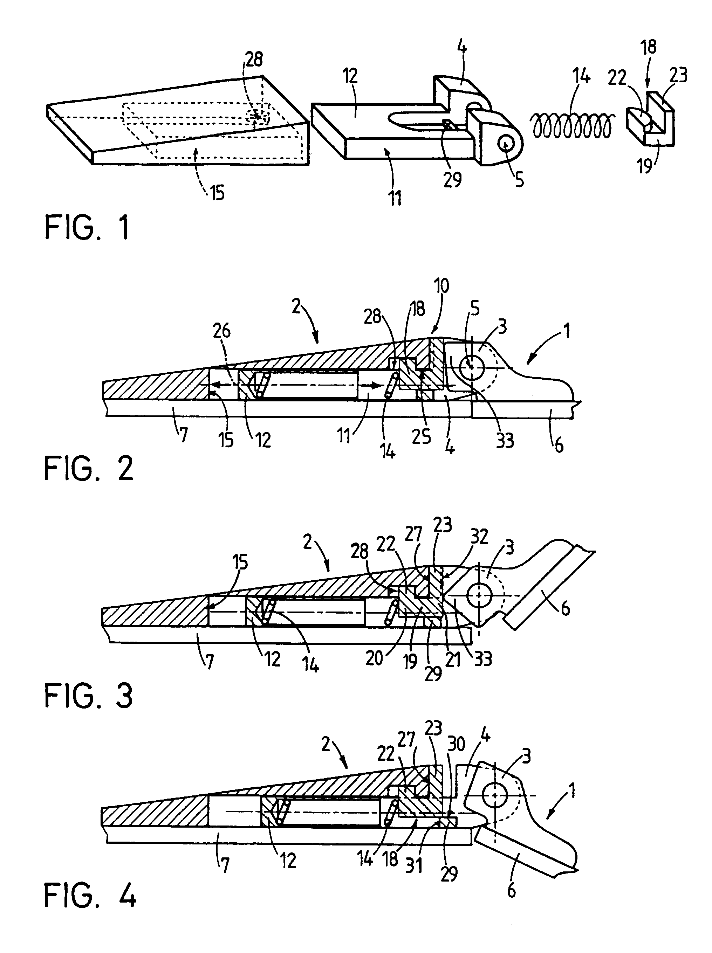

La charnière élastique pour lunettes représentée aux figures 1 à 4 comprend deux parties 1 et 2 articulées l'une à l'autre grâce aux charnons 3 et 4 solidarisés par l'introduction d'une vis dans l'alésage 5. La partie 1 est fixée à la face frontale 6 de la monture de lunettes et la partie 2 est rendue solidaire d'une branche 7 de lunettes au moyen d'un mécanisme élastique 10 particulier. Ce dernier comprend un prolongement 11 du charnon 4 présentant un boîtier 12 dans lequel est logé un ressort à boudin 14. Le boîtier 12 est inséré et retenu de façon coulissante dans un logement 15 solidaire de la branche de lunettes 7. La charnière comprend en outre une pièce de verrouillage 18 comportant une portion centrale 19 solidaire de deux portions latérales 20 et 21 présentant chacune une saillie transversale 22,23. La première des portions latérales 20 possède une section droite plus petite que l'ouverture 25 du logement 15 de façon à pouvoir être introduite dans ce logement par coulissement parallèle à l'axe longitudinal 26 de ce logement. La seconde portion latérale 21 présente une section droite plus grande que l'ouverture 25 et bute ainsi par sa saillie transversale 23 contre le bord supérieur 27 de l'ouverture 25 du logement 15. Une creusure 28 est prévue dans ce dernier, dans laquelle pénètre la saillie transversale 22 par déplacement transversal à l'axe 26 du logement. Finalement, la seconde partie 2 avec son prolongement 11 est munie d'un élément de retenue 29 sous forme d'une entretoise de section rectangulaire.

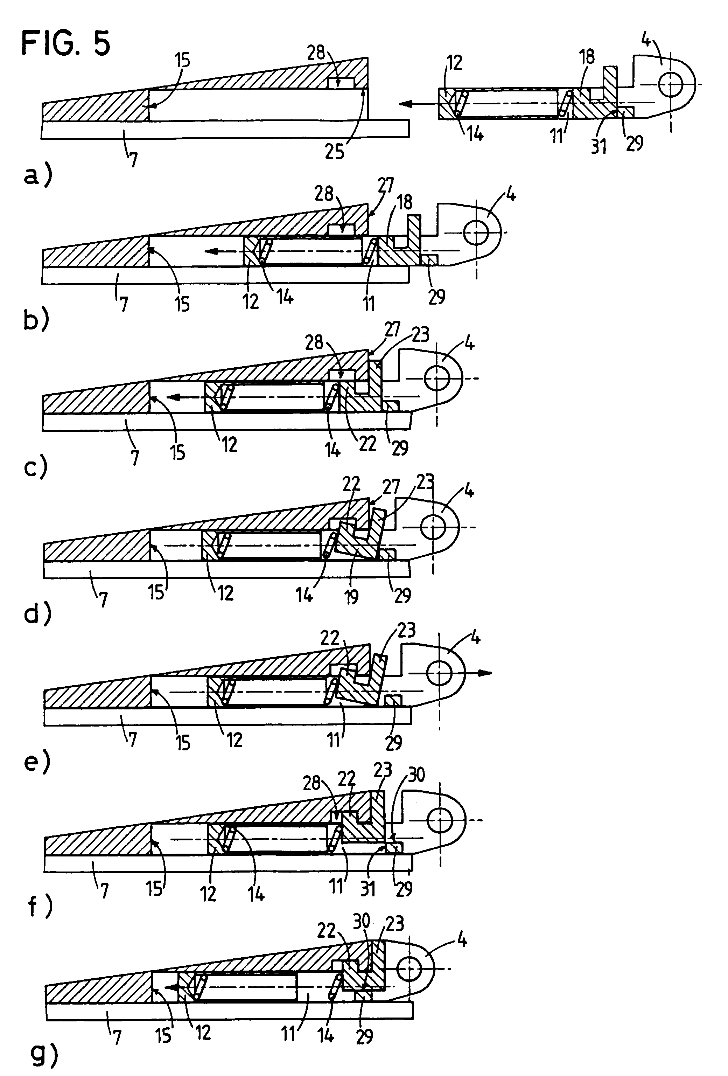

Cette entretoise coopère par une première face 30 avec la pièce de verrouillage 18 de façon à la maintenir dans la position illustrée aux figures 2 à 4 dans lesquelles la saillie transversale 22 est engagée dans la creusure 28 et ceci pour toutes les positions de travail de la charnière et de la branche 7 de lunettes. Avant le montage définitif de la charnière dans un stade de prémontage illustré à la figure 5a), la pièce de verrouillage 18 est maintenue sur le prolongement 11 par action élastique du ressort 14 sollicitant la pièce de verrouillage 18 contre une seconde face 31 de l'élément de retenue 29 avant que ledit prolongement 11 soit inséré suivant le sens longitudinal dans le logement 15.

L'ensemble constitué par la pièce de verrouillage 18, le logement 15 avec sa creusure 28 et le prolongement 11 avec l'élément de retenue 22 est conformé de façon que lors de l'introduction du prolongement 11 dans le logement 15, la pièce de verrouillage 18 prémontée sur ce prolongement 11 bute par la saillie transversale 23 contre le bord 27 du logement opposé à l'élément de retenue 29 (fig. 5c). Elle est alors basculée dans le sens des aiguilles d'une montre à la figure 5d) par l'action conjointe de l'élément de retenue 29 et le bord 27. Ensuite, lorsque le prolongement 11 est relâché, voire légèrement retiré du logement 15 (fig. 5e), la pièce de verrouillage 18 se déplace sous l'action du ressort 14 suivant une direction transversale à l'axe 26 du logement 15 en basculant dans le sens contraire aux aiguilles d'une montre de façon que la saillie transversale 22 pénètre dans la creusure 28. L'élément de retenue 29 passe alors en-dessous de la pièce de verrouillage 18 sous l'action du ressort 14 et maintient cette pièce par sa première face 30 en place dans la position de travail de la charnière (fig. 5g).

Dans cette position, le ressort 14 prend appui d'une part sur le fond du boîtier 12 et d'autre part sur la pièce de verrouillage 18. La face libre 32 de la seconde portion latérale 23 de la pièce de verrouillage 18 constitue une surface d'appui destinée à coopérer avec le charnon 3 de la première partie 1 de la charnière, qui présente un profil de came 33 définissant par sa coopération avec ladite face libre 32 une position d'ouverture normale (fig. 2) et une position repliée de la branche 7 qui est élastiquement sollicitée contre la came 33 de la face frontale 6.

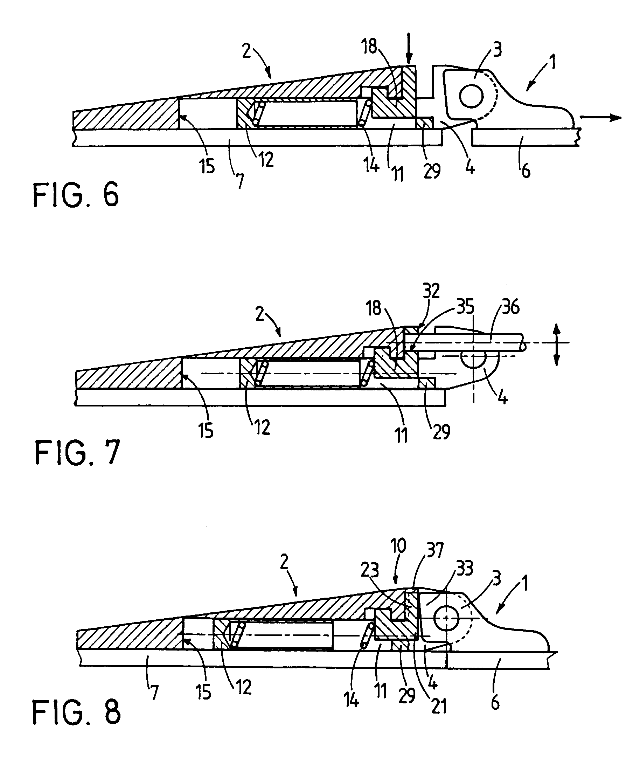

Lorsqu'on désire démonter la charnière (fig. 6), il suffit de tirer sur le prolongement 11 suivant un sens parallèle au sens longitudinal pour que la pièce de verrouillage 18 soit dégagée de la pièce de retenue 29 et de déplacer transversalement vers le bas la pièce de verrouillage 18, le prolongement 11 peut ainsi être extrait du logement 15.

Il est à noter que la première partie 1 avec son charnon 3 peut être vissée au charnon 4 du prolongement 11 avant que ce dernier ne soit monté à la branche 7 de lunettes. Ceci permet un vissage de la charnière élastique sans tension entre les deux charnons (3,4).

Selon une variante de la charnière illustrée à la figure 7, la face libre 32 de la pièce de verrouillage 18 comprend un trou 35 destiné à coopérer avec un outil 36 permettant de déplacer la pièce de verrouillage perpendiculairement à l'axe du logement, lors de son montage et de son extraction.

Dans une seconde variante représentée à la figure 8, le logement 15 comprend à son bord une avancée 37 recouvrant les bords de la seconde portion latérale 21 de la pièce de verrouillage 18, ce qui permet de rendre invisibles toutes les pièces du mécanisme élastique 10.

En conclusion, la construction décrite permet un montage très rapide du mécanisme élastique de la charnière. La pièce de verrouillage 18 est mise en place automatiquement sans vissage et sert en même temps de surface d'appui pour la came 33 du charnon 3 opposé.

Elle peut être démontée très aisément. La pièce de retenue 29 possède une double fonction de retenue lors du prémontage et du montage. L'assemblage des deux charnons 3,4 peut être effectué sans être gêné par l'action élastique du ressort 14.

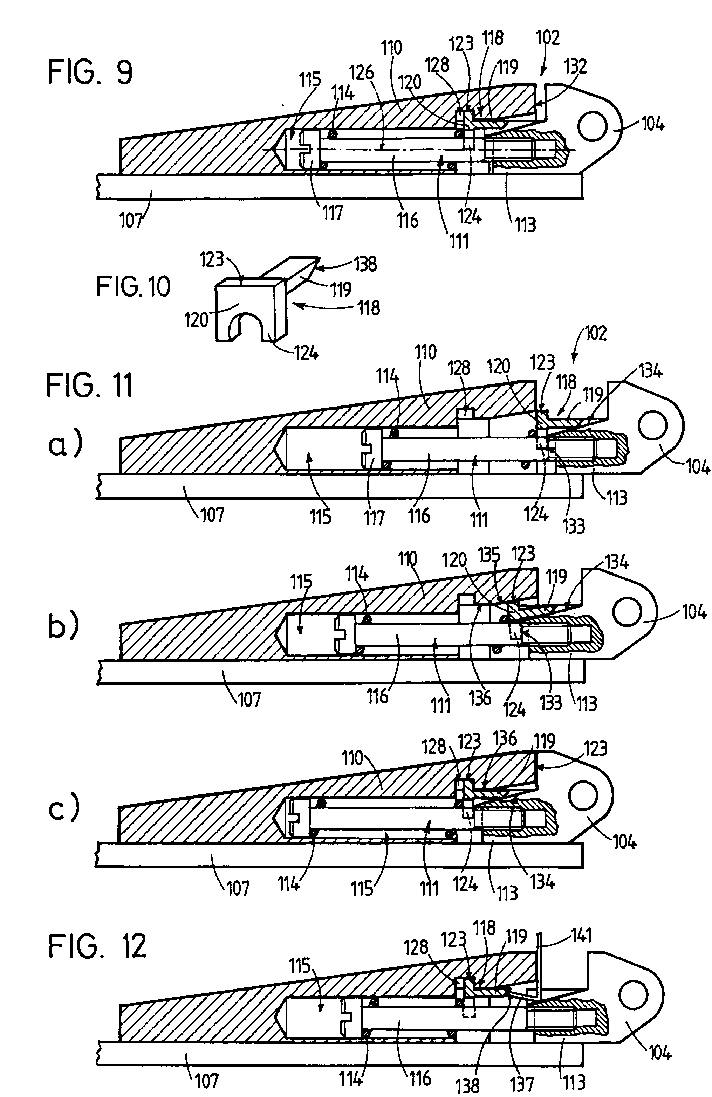

Le second mode d'exécution illustré aux figures 9 à 12 comprend également une partie fixée à la face frontale (non illustrée) de la monture de lunettes et une partie 102 rendue solidaire d'une branche de lunettes 107 au moyen d'un mécanisme élastique 110 particulier. Ce dernier comporte un prolongement 111 du charnon 104 présentant une pièce 113 solidaire du charnon 104 et une vis 116 montée sur la pièce 113. Le prolongement 111 est disposé de façon coulissante dans un logement 115 solidaire de la branche de lunettes 107. Une pièce de verrouillage 118 comprend une première portion 119 sensiblement parallèle à l'axe longitudinal 126 du logement 115 et une seconde portion 120 qui lui est sensiblement perpendiculaire. Cette seconde portion 120 comprend une partie supérieure 123 destinée à s'engager dans une creusure 128 prévue dans la paroi du logement 115 et une partie inférieure 124 comportant une forme générale en fer à cheval s'engageant sur la vis 114. Le mécanisme élastique 110 comprend en outre un ressort à boudin 114 monté sur la vis 116 et s'appuyant par une première extrémité sur la tête 117 de la vis 116 et par sa seconde extrémité sur la partie inférieure 124 en fer à cheval de la seconde portion 120 de la pièce de verrouillage 118, bloquant donc cette extrémité du ressort 114 par rapport à la paroi du logement 115. Ainsi le ressort 114 sollicite le prolongement 111 en direction du fond du logement 115. La face 132 du logement 115 constitue une face d'appui destinée à coopérer avec un profil de came de la première partie de la charnière, comme cela est illustré à la figure 2 du premier mode d'exécution.

Les figures 11a), b) et c) illustrent le montage du mécanisme élastique 110. Avant l'introduction du prolongement 111 dans le logement 115, le ressort 114 est monté sur la vis 116 et y maintient la pièce de verrouillage 118 provisoirement en sollicitant la partie inférieure 124 en fer à cheval de la seconde portion 120 contre la face frontale 133 de la pièce 113 du charnon 104 qui fait saillie par rapport à la vis 116. La première portion 119 de la pièce de verrouillage 118 repose sur un plan incliné 134 de la pièce 113 (fig. 11a)

La pièce de verrouillage 118 ainsi maintenue est introduite dans le logement 115 et sa partie supérieure 123 glisse le long d'un chanfrein 135 aboutissant à une section horizontale 136 du logement 115 ( fig. 116), tandis que la partie inférieure 124 en contact avec la face frontale 133 de la pièce 113 est poussée par cette pièce.

Finalement, lorsque la partie supérieure 123 de cette pièce de verrouillage 118 arrive au niveau de la creusure 128, elle s'y engage sous l'effet du ressort 114 et du plan incliné 134 (fig. 11c) La première portion 119 est alors appliquée contre la section horizontale 136 du logement 115. L'autre charnon, non-illustré, pourra être fixé au charnon 104 avant ou après l'introduction du prolongement 111 dans le logement 115.

Le démontage de la branche 107 par rapport à la charnière est illustré à la figure 12. Le charnon 104 est tiré fortement vers la droite à la figure 12 en comprimant le ressort 114. L'ouverture du logement 115 est ainsi dégagée et la pièce de verrouillage 118 est rendue accessible de l'extérieur pour un outil 141.

Ce dernier possède la forme d'une tige comportant une extrémité 137 repliée destinée à coopérer avec une face terminale oblique 138 de la première portion 119 de la pièce de verrouillage 118. En poussant avec cette extrémité 137 contre la face terminale oblique 138, la partie supérieure 123 de la seconde portion sort de la creusure 128, et le prolongement 111 n'est plus retenu dans le logement 115 et peut donc être enlevé.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier le logement 15 pourra être prévu sur la face frontale 6 des lunettes et le charnon 3 avec la came 33 pourra être solidaire de la branche 7.

Le prolongement 11 pourra présenter toute autre forme munie d'une surface arrière servant d'appui pour le ressort 14. Le charnon 3 pourra avoir une came 33 différente avec plus de deux replats.

## Revendications

1. Charnière élastique pour lunettes, comprenant deux parties (1,2) articulées l'une à l'autre, une première (1) de ces parties étant destinée à être fixée à la face frontale (6) de la monture de lunettes et la seconde (2) de ces parties comportant un logement (15;115) prévu à l'extrémité avant d'une branche (7;107) de lunettes et un prolongement (11;111) monté en coulissement dans ledit logement (15; 115) suivant l'axe longitudinal (26;126) dudit logement (15;115) et soumis à l'action d'un ressort de rappel (14;114) retenu dans ledit logement (15;115) par une pièce de verrouillage (18;118) engagée au moins partiellement dans ce logement (15;115), le ressort de rappel (14;114) prenant appui d'une part sur une surface dudit prolongement (11;111) et d'autre part sur la pièce de verrouillage (18;118), caractérisée en ce que la pièce de verrouillage (18;118) comprend au moins deux branches (19,22; 119,120) solidaires et sensiblement perpendiculaires entre elles, une première branche (19;119) possédant un allongement sensiblement parallèle à l'axe longitudinal (26;126) du logement (15;115) et une seconde branche (22;120) étant sensiblement perpendiculaire audit axe longitudinal (26;126), le logement présentant une creusure latérale (28;128), ladite deuxième branche (22;122) étant agencée de manière à s'engager au moins partiellement dans la creusure latérale (28;128) et à retenir le ressort de rappel (14;114), le logement (15;115) et la première branche (19;119) étant conformés de façon que cette dernière soit accessible de l'extérieur du logement (15;115).

2. Charnière selon la revendication 1, caractérisée en ce que la première branche de la pièce de verrouillage (18) est constituée par une portion centrale (19) solidaire, d'une part, de la deuxième branche constituée par une première portion latérale (20) et, d'autre part, d'une seconde portion latérale (21), les deux portions latérales (20,21) présentant chacune une saillie transversale (22,23), une première (20) des portions latérales présentant une section droite plus petite que l'ouverture (25) du logement (15) et étant destinée à être introduite dans ledit logement (15) par coulissement parallèle à l'axe longitudinal (26) du logement, la seconde (21) desdites portions latérales présentant une section droite plus grande que l'ouverture (25) du logement (15) de façon à buter par sa saillie transversale (23) contre le bord (27) de l'ouverture (25) dudit logement (15), la creusure latérale (28) étant destinée à recevoir au moins partiellement ladite saillie transversale (22) de la première portion latérale (20) après la mise en place de la pièce de verrouillage (18) par déplacement transversal à l'axe (26) du logement, ledit prolongement (11) comportant un élément de retenue (29) susceptible de coopérer par une première face (30) avec la pièce de verouillage (18) de façon à la maintenir dans la position de travail dans laquelle ladite saillie transversale (22) de la première portion latérale (20) est engagée dans la creusure latérale (28).

3. Charnière selon la revendication 2, caractérisée en ce que la seconde partie (2) de la charnière avec son prolongement (11) est conformée de façon à maintenir la pièce de verrouillage (18) sur le prolongement (11) par action élastique du ressort de rappel (14) sollicitant la pièce de verrouillage (18) contre une seconde face (31) dudit élément de retenue (29), dans une position de montage avant que ledit prolongement (11) soit introduit suivant le sens longitudinal dans le logement (15).

4. Charnière selon la revendication 2 ou 3, caractérisée en ce que ledit prolongement (11) comporte un boîtier (12) dans lequel est logé le ressort de rappel (14).

5. Charnière selon la revendication 4, caractérisée en ce que l'élément de retenue est constitué par une entretoise (29) de section rectangulaire fixée sur le côté dudit prolongement (11) opposé à celui venant en contact avec ladite creusure (28).

6. Charnière selon l'une des revendications 2 à 5, caractérisée en ce que l'ensemble constitué par la pièce de verrouillage (18), le logement (15) avec sa creusure (28) et le prolongement (11) avec l'élément de retenue (29) est conformé de façon que, lors de l'introduction du prolongement (11) dans le logement (15), la pièce de verrouillage (18) prémontée sur ce prolongement (11) entre le ressort de rappel (14) et la première face (31) de l'élément de retenue (29) soit basculée par action conjointe de l'élément de retenue (29) et du bord (27) du logement (15) opposé à cet élément de retenue (29) et de façon que sous l'action du ressort de rappel (14) sur la pièce de verrouillage (18), cette dernière soit déplacée suivant une direction transversale à l'axe (26) du logement et que la saillie transversale (22) de ladite première portion latérale (20) pénètre dans ladite creusure (28), l'élément de retenue (29) entrant par sa première face (30) en contact avec la pièce de verrouillage (18) pour la maintenir en place dans la position de travail de la charnière.

7. Charnière selon la revendication 2, caractérisée en ce que la face libre (32) de ladite seconde portion latérale (21) constitue une surface d'appui destinée à coopérer avec un charnon solidaire de la première partie (1) de la charnière, ce charnon présentant un profil de came (33) définissant par sa coopération avec ladite seconde portion latérale (21) au moins une position d'ouverture normale et une position repliée de la branche.

8. Charnière selon l'une des revendications 2 à 7, caractérisée en ce que le logement (15) comprend une avancée (37) recouvrant au moins partiellement les bords de ladite seconde portion latérale (21) de la pièce de verrouillage (18).

9. Charnière selon la revendication 2, caractérisée en ce que ladite seconde portion latérale (21) de la pièce de verrouillage (18) comprend sur sa face libre (32) un trou (35) destiné à coopérer avec un outil (36) permettant de déplacer la pièce de verrouillage (18) perpendiculairement à l'axe (26) du logement lors de son montage et de son extraction.

10. Charnière selon la revendication 6, caractérisée en ce que l'élément de retenue (29) est conformé de façon à maintenir en place par sa première face (30) la pièce de verrouillage (18) avec sa saillie transversale (22) de la première portion latérale (20) engagée dans ladite creusure (28) pour toutes les positions de travail de la charnière et de la branche (7) de lunettes.

11. Charnière selon la revendication 10, caractérisée en ce que l'élément de retenue (29) et la pièce de verrouillage (18) sont conformés de façon à permettre un démontage dudit prolongement (11) du logement (15) par traction sur le prolongement (11) suivant un sens parallèle audit sens longitudinal pour que la pièce de verrouillage (18) soit dégagée de la pièce de retenue (29) et par déplacement transversal de la pièce de verrouillage (18).

12. Charnière selon les revendications 2 et 6, caractérisée en ce que dans ladite position de montage, avant que le prolongement (11) ne soit introduit dans le logement (15), le charnon présentant le profil de came (33) est vissé au prolongement (11) muni du second charnon de la charnière.

13. Charnière selon la revendication 1, caractérisée en ce que le prolongement (111) comprend une tige (116) montée sur la seconde partie et portant le ressort (114) qui s'appuie par une première extrémité sur une portion élargie (117) de la tige (116) et par sa deuxième extrémité sur la pièce de verrouillage (118), ladite seconde branche (120) comportant une partie en saillie (123) engagée dans la creusure latérale (128) et une partie (124) conformée de façon à entourer au moins partiellement la tige (116) pour servir de butée pour la deuxième extrémité du ressort (114) monté sur la tige.

14. Charnière selon la revendication 13, caractérisée en ce que la première branche (119) de la pièce de verouillage (118) comprend à son extrémité libre une face terminale oblique (138) destinée à coopérer avec un outil (141) pour dégager ladite partie en saillie (123) de la creusure latérale (128).

15. Charnière selon la revendication 13, caractérisée en ce que la pièce de verrouillage (118) est conformée de façon qu'elle soit maintenue sur le prolongement (111) par action du ressort de rappel (114) sollicitant cette pièce de verrouillage (118) contre une face (133) de ladite seconde partie (102), dans une position de montage avant que le prolongement (111) soit introduit dans le logement.

16. Charnière selon la revendication 15, caractérisée en ce que ladite seconde partie (102) comprend une face oblique (134) par rapport audit axe longitudinal (126), cette face oblique (134) étant inclinée en direction de la pièce de verrouillage (118) et destinée à coopérer avec la première branche (119) lors du montage du prolongement (111) dans le logement (115).

17. Charnière selon la revendication 15 ou 16, caractérisée en ce que le logement (115) présente à son extrémité ouverte un chanfrein (135) conformé à coopérer avec la partie en saillie (123) pour diriger cette dernière vers la creusure latérale (128) lors du montage du prolongement (111) dans le logement (115).

## Patentansprüche

1. Elastisches Brillenscharnier mit zwei gelenkig miteinander verbundenen Teilen (1, 2), wobei ein erstes (1) dieser Teile dazu bestimmt ist, an der Vorderseite (1) des Brillengestells befestigt zu werden, und das zweite (2) dieser Teile ein Lager (15; 115), das am vorderen Ende eines Brillenbügels (7; 107) angebracht ist, sowie ein Verlängerungsstück (11; 111) hat, das gleitend in das benannte Lager (15; 115) eingebaut ist, und zwar der Längsachse (26; 126) des benannten Lagers (15; 115) folgend und der Wirkung einer Rückstellfeder (14; 114) unterworfen, die in dem benannten Lager (15; 115) durch eine Verriegelung (18; 118) gehalten wird, die zumindest teilweise in dieses Lager (15; 115) eingefügt ist, wobei die Rückstellfeder (14; 114) einerseits auf einer Fläche des benannten Verlängerungsstücks (11; 111) und andererseits auf der Verriegelung (18; 118) aufliegt, dadurch gekennzeichnet, dass die Verriegelung (18; 118) aus zumindest zwei Armen (19, 22; 119, 120) besteht, die fest miteinander verbunden und zueinander im wesentlichen senkrecht sind, wobei ein erster Arm (19; 119) eine im wesentlichen zur Längsachse (26; 126) des Lagers (15; 115) parallele Verlängerung hat und ein zweiter Arm (22; 120) im wesentlichen senkrecht zu der benannten Längsachse (26; 126) ist, während das Lager eine seitliche Aushöhlung (28; 128) hat und der benannte zweite Arm (22; 122) so eingerichtet ist, dass er zumindest teilweise in die seitliche Aushöhlung (28; 128) einrastet und die Rückstellfeder (14; 114) hält, wobei das Lager (15; 115) und der erste Arm (19; 119) so gestaltet sind, dass letzterer von der Aussenseite des Lagers (15; 115) her zugänglich ist.

2. Scharnier gemäss Anspruch 1, dadurch gekennzeichnet, dass der erste Arm der Verriegelung (18) aus einem mittleren Abschnitt (19) besteht, der einerseits mit dem aus einem ersten seitlichen Abschnitt (20) bestehenden zweiten Arm und andererseits mit einem zweiten seitlichen Abschnitt (21) fest verbunden ist, wobei die beiden seitlichen Abschnitte (20, 21) je einen querverlaufenden Vorsprung (22, 23) haben, ein erster (20) der seitlichen Abschnitte einen Querschnitt aufweist, der kleiner als die Öffnung (25) des Lagers (15) ist, und dazu bestimmt ist, parallel zur Längsachse (26) des benannten Lagers (15) gleitend in dieses Lager eingeführt zu werden, und der zweite (21) der benannten seitlichen Abschnitte einen Querschnitt aufweist, der grösser als die Öffnung (25) des Lagers (15) ist, so dass er mit seinem querverlaufenden Vorsprung (23) gegen die Kante (27) der Öffnung (25) des benannten Lagers (15) stösst, während die seitliche Aushöhlung (28) dazu bestimmt ist, nach dem Einsetzen der Verriegelung (18) durch Verschiebung quer zur Achse (26) des Lagers wenigstens teilweise den benannten, querverlaufenden Vorsprung (22) des ersten seitlichen Abschnitts (20) aufzunehmen, und das benannte Verlängerungsstück (11) ein Halteelement (29) hat, das vermittels einer ersten Bahn (30) so mit der Verriegelung (18) zusammenwirken kann, dass diese in ihrer Arbeitsstellung gehalten wird, in der der benannte querverlaufende Vorsprung (22) des ersten seitlichen Abschnitts (20) in die seitliche Aushöhlung (28) eingefügt ist.

3. Scharnier gemäss Anspruch 2, dadurch gekennzeichnet, dass das zweite Teil (2) des Scharniers mit seinem Verlängerungsstück (11) so gestaltet ist, dass die Verriegelung (18) durch die elastische Wirkung der Rückstellfeder (14), die die Verriegelung (18) gegen eine zweite Bahn (31) des benannten Halteelements (29) drückt, auf dem Verlängerungsstück (11) gehalten wird, und zwar in einer Montagestellung, bevor das benannte Verlängerungsstück (11) in Längsrichtung in das Lager (15) eingeführt wird.

4. Scharnier gemäss Anspruch 2 oder 3, dadurch gekennzeichnet, dass das benannte Verlängerungsstück (11) ein Gehäuse (12) aufweist, worin die Rückstellfeder (14) untergebracht ist.

5. Scharnier gemäss Anspruch 4, dadurch gekennzeichnet, dass das Halteelement aus einer Querstrebe (29) rechteckigen Querschnitts besteht, die auf der Seite des benannten Verlängerungsstücks (11) angebracht ist, die der mit der benannten Aushöhlung (28) in Berührung kommenden Seite entgegengesetzt ist.

6. Scharnier gemäss einem der Ansprüche 2 bis 5, dadurch gekennzeichnet, dass die aus der Verriegelung (18), dem Lager (15) mit seiner Aushöhlung (28) und dem Verlängerungsstück (11) mit dem Halteelement (29) bestehende Baugruppe so gestaltet ist, dass bei Einführung des Verlängerungsstücks (11) in das Lager (15) die zwischen der Rückstellfeder (14) und der ersten Bahn (31) des Halteelements (29) auf dieses Verlängerungsstück (11) vormontierte Verriegelung (18) durch die gemeinsame Wirkung des Halteelements (29) und der Kante (27) des Lagers (15), die diesem Halteelement (29) gegenüber liegt, so gekippt wird, dass unter der Einwirkung der Rückstellfeder (14) auf die Verriegelung (18) letztere in einer Richtung quer zur Achse (26) des Lagers verschoben wird und dass der querverlaufende Vorsprung (22) des benannten ersten seitlichen Abschnitts (20) in die benannte Aushöhlung (28) eindringt, wobei das Halteelement (29) über seine erste Bahn (30) mit der Verriegelung (18) in Berührung kommt, um sie in der Arbeitsstellung des Scharniers an ihrem Platz zu halten.

7. Scharnier gemäss Anspruch 2, dadurch gekennzeichnet, dass die offene Seite (32) des benannten zweiten seitlichen Abschnitts (21) eine Stützfläche darstellt, die dazu bestimmt ist, mit einem Scharnierteil zusammenzuwirken, das mit dem ersten Teil (1) des Scharniers fest verbunden ist, wobei dieses Scharnierteil ein Nockenprofil (33) aufweist, das vermittels seiner Zusammenwirkung mit dem benannten zweiten seitlichen Abschnitt (21) zumindest eine normal geöffnete Stellung und eine zusammengeklappte Stellung des Bügels definiert.

8. Scharnier gemäss einem der Ansprüche 2 bis 7, dadurch gekennzeichnet, dass das Lager (15) einen Vorsprung (37) hat, der zumindest teilweise die Kanten des benannten zweiten seitlichen Abschnitts (21) der Verriegelung (18) verdeckt.

9. Scharnier gemäss Anspruch 2, dadurch gekennzeichnet, dass der benannte zweite seitliche Abschnitt (21) der Verriegelung (18) auf seiner offenen Seite (32) ein Loch (35) hat, das dazu bestimmt ist, mit einem Werkzeug (36) zusammenzuwirken und zu gestatten, dass die Verriegelung (18) bei ihrem Ein- und Ausbau senkrecht zur Achse (26) des Lagers verschoben wird.

10. Scharnier gemäss Anspruch 6, dadurch gekennzeichnet, dass das Halteelement (29) so gestaltet ist, dass es vermittels seiner ersten Bahn (30) die Verriegelung (18) an ihrem Platz hält, während der querverlaufende Vorsprung (22) des ersten seitlichen Abschnitts (20) in allen Arbeitsstellungen des Scharniers und des Brillenbügels (7) in die benannte Aushöhlung (28) eingerastet ist.

11. Scharnier gemäss Anspruch 10, dadurch gekennzeichnet, dass das Halteelement (29) und die Verriegelung (18) so gestaltet sind, dass sie es gestatten, dass das benannte Verlängerungsstück (11) des Lagers (15) durch Ziehen am Verlängerungsstück (11) in einer Richtung parallel zu der benannten Längsrichtung, wodurch die Verriegelung (18) aus dem Haltestück (29) ausrastet, und durch Querverschiebung der Verriegelung (18) aus dem Lager (15) ausgebaut wird.

12. Scharnier gemäss Ansprüchen 2 bis 6, dadurch gekennzeichnet, dass in der benannten Montagestellung, bevor das Verlängerungsstück (11) in das Lager (15) eingeführt worden ist, das das Nockenprofil (33) aufweisende Scharnierteil auf das mit dem zweiten Scharnierteil des Scharniers versehene Verlängerungsstück (11) aufgeschraubt ist.

13. Scharnier gemäss Anspruch 1, dadurch gekennzeichnet, dass das Verlängerungsstück (111) einen Stift (116) aufweist, der auf das zweite Teil montiert ist und die Feder (114) trägt, die mit einem ersten Ende auf einem verbreiterten Abschnitt (117) des Stifts (116) und mit ihrem zweiten Ende auf der Verriegelung (118) ruht, wobei der benannte zweite Arm (120) einen vorspringenden Abschnitt (123), der in die seitliche Aushöhlung (128) eingefügt ist, sowie einen Abschnitt (124) aufweist, der so gestaltet ist, dass er zumindest teilweise den Stift (116) umgibt, um als Anschlag für das zweite Ende der auf den Stift montierten Feder (114) zu dienen.

14. Scharnier gemäss Anspruch 13, dadurch gekennzeichnet, dass der erste Arm (119) der Verriegelung (118) an seinem freien Ende eine abgeschrägte Abschlussfläche (138) aufweist, die dazu bestimmt ist, mit einem Werkzeug (141) zusammenzuwirken, um den benannten vorspringenden Abschnitt (123) aus der seitlichen Aushöhlung (128) herauszulösen.

15. Scharnier gemäss Anspruch 13, dadurch gekennzeichnet, dass die Verriegelung (118) so gestaltet ist, dass sie in einer Montagestellung, bevor das Verlängerungsstück (111) in das Lager eingeführt worden ist, durch die Wirkung der Rückstellfeder (114), die diese Verriegelung (118) gegen eine Seite (133) des benannten zweiten Teils (102) drückt, auf dem Verlängerungsstück (111) gehalten wird.

16. Scharnier gemäss Anspruch 15, dadurch gekennzeichnet, dass das benannte zweite Teil (102) eine Seite (134) aufweist, die bezüglich der benannten Längsachse (126) abgeschrägt ist, und zwar so, dass sich diese abgeschrägte Seite (134) der Verriegelung (118) zu neigt und dazu bestimmt ist, bei Einbau des Verlängerungsstücks (111) in das Lager (115) mit dem ersten Arm (119) zusammenzuwirken.

17. Scharnier gemäss Anspruch 15 oder 16, dadurch gekennzeichnet, dass das Lager (115) an seinem offenen Ende eine Abschrägung (135) aufweist, die so gestaltet ist, dass sie mit dem vorspringenden Abschnitt (123) zusammenwirkt, um diesen beim Einbau des Verlängerungsstücks (111) in das Lager (115) zu der seitlichen Aushöhlung (128) hin zu leiten.

## Claims

1. A resilient hinge for spectacles, comprising two parts (1, 2) connected rotatably together, a first one (1) of the parts being designed for fastening to the face member (6) of the frame of the spectacles and the second (2) of these parts including a housing (15; 115) provided at the front end of a temple (7; 107) of the spectacles and an extension (11; 111) mounted slidably in said housing (15; 115) along the longitudinal axis (26; 126) of said housing (15; 115) and subjected to the action of a return spring (14; 114) retained inside said housing (15; 115) by a locking piece (18; 118) engaged at least partly in this housing (15; 115), the return spring (14; 114) abutting, on the one hand, against a surface of said extension (11; 111) and, on the other hand, against the locking piece (18; 118), characterized in that the locking piece (18; 118) includes at least two integral branches (19, 22; 119, 120) which are substantially perpendicular to each other, a first branch (19; 119) having an extension substantially parallel to the longitudinal axis (26; 126) of the housing (15; 115) and a second branch (22; 120) substantially perpendicular to said longitudinal axis (26; 126), the housing exhibiting a lateral hollow (28; 128), said second branch (22; 122) being arranged in such a manner as to engage itself at least partly into the lateral hollow (28; 128) and to retain a return spring (1; 114), the housing (15; 115) and the first branch (19; 119) being constructed so that the latter be accessible from the outside of the housing (15; 115).

2. A hinge according to claim 1, characterized in that the first branch of the locking piece (18) is comprised of a central portion (19) integral, on the one hand, with the second branch comprised of a first lateral portion (20) and, on the other hand, with a second lateral portion (21), the two lateral portions (20, 21) exhibiting both a transverse protrusion (22, 23), a first one (20) of the lateral portions exhibiting a cross section which is smaller than the opening (25) of the housing (15), while being designed for introduction into said housing (15) by a sliding motion parallel to the longitudinal axis (26) of the housing, the second (21) of said lateral portions exhibiting a cross section greater than the opening (25) of the housing (15), in such a manner as to abut by its transverse protrusion (23) against the edge (27) of the opening (25) of said housing (15), the lateral hollow (28) being designed for receiving at least partly said transverse protrusion (22) of the first lateral portion (20) after the positioning of the locking piece (18) by a movement perpendicular to the axis (26) of the housing, said extension (11) including a retaining member (29) capable of cooperating by a first face (30) with the locking piece (18) so as to maintain the same in the working position in which said transverse protrusion (22) of the first lateral portion (20) is engaged into the lateral hollow (28).

3. A hinge according to claim 2, characterized in that the second part (2) of the hinge with its extension (11) is constructed so as to retain the locking piece (18) on the extension (11) by the resilient action of the return spring (14) biasing the locking piece (18) against a second face (31) of said retaining member (29), in an assembling position before the introduction of said extension (11) along the longitudinal direction, into the housing (15).

4. A hinge according to claim 2 or 3, characterized in that said extension (11) includes a casing (12) into which is housed the return spring (14).

5. A hinge according to claim 4, characterized in that the retaining member is comprised of a spacer member (29) of a rectangular cross-section fastened on the side of said extension (11) opposite to that coming in contact with said hollow (28).

6. A hinge according to one of claims 2 to 5, characterized in that the assembly comprised of the locking piece (18), the housing (15) with its hollow (28) and the extension (11) with the retaining member (29) is constructed so that, upon introduction of the extension (11) into the housing (15), the locking piece (18) mounted previously on this extension (11) between the return spring (14) and the first face (31) of the retaining member (29) be swung by the combined action of the retaining member (29) and of the edge (27) of the housing (15) opposite to this retaining member (29) and so that, under the action of the return spring (14) on the locking piece (18), the latter be displaced along a direction perpendicular to the axis (26) of the housing and that the transverse protrusion (22) of said first lateral portion (20) penetrate into said hollow (28), the retaining member (29) coming by its first face (30) in contact with the locking piece (18) for retaining the same in place, in the operative position of the hinge.

7. A hinge according to claim 2, characterized in that the free face (32) of said second lateral portion (21) provides an abutment surface designed for cooperating with a knuckle integral with the first part (1) of the hinge, this knuckle exhibiting a cam profile (33) defining by is cooperation with said second lateral portion (21) at least one normal opened position and one folded position of the temple.

8. A hinge according to one of claims 2 to 7, characterized in that the housing (15) includes an extension (37) covering at least partly the edges of said second lateral portion (21) of the locking piece (18).

9. A hinge according to claim 2, characterized in that said second lateral portion (21) of the locking piece (18) has on its free face (32) a hole (35) designed for cooperating with a tool (36) for displacing the locking piece (18) perpendicularly to the axis (26) of the housing during the mounting and the extraction thereof.

10. A hinge according to claim 6, characterized in that the retaining member (29) is constructed in such a manner as to maintain in position by its first face (30) the locking piece (18) with the transverse protrusion (22) of the first lateral portion (20) engaged into said hollow (28) for all the working positions of the hinge and of the temple (7) of the spectacles.

11. A hinge according to claim 10, characterized in that the retaining member (29) and the locking piece (18) are constructed in such a manner as to allow the disassembling of said extension (11) from the housing (15) by pulling said extension (11) along a direction parallel to said longitudinal direction, so as to disengage the locking piece (18) from the retaining piece (29) and by the transverse movement of the locking piece (18).

12. A hinge according to claims 2 and 6, characterized in that in said assembling position, before the introduction of the extension (11) into the housing (15), the knuckle exhibiting a cam profile (33) is screwed to the extension (11) carrying the second knuckle of the hinge.

13. A hinge according to claim 1, characterized in that the extension (111) includes a rod (116) mounted on the second part and carrying the spring (114) which abuts by a first end against an enlarged portion (117) of the rod (116) and by its second end against the locking piece (118), said second branch (120) including a protruding part (123) engaged into the lateral hollow (128) and a part (124) constructed in such a manner as to surround at least partly the rod (116), to act as a stop for the second end of the spring (114) mounted on the rod.

14. A hinge according to claim 13, characterized in that the first branch (119) of the locking piece (118) has, at its free end, an oblique terminal face (138) designed for cooperating with a tool (141) for disengaging said protruding part (123) from the lateral hollow (128).

15. A hinge according to claim 13, characterized in that the locking piece (118) is constructed in such a manner that it be maintained on the extension (111) by the action of the return spring (114) biasing this locking piece (118) against a face (133) of said second part (102) in an assembling position before the introduction of the extension (111) into the housing.

16. A hinge according to claim 15, characterized in that said second part (102) includes a face (134) which is oblique relative to said longitudinal axis (126), this oblique face (134) being sloped in the direction of the locking piece (118) and designed for cooperating with the first branch (119) when assembling the extension (111) into the housing (115).

17. A hinge according to claim 15 or 16, characterized in that the housing (115) has, at its open end, a bevel (135) constructed to cooperate with the protruding part (123) and to direct the same towards the lateral hollow (128) when assembling the extension (111) into the housing (115).
